(19) Europäisches Patentamt
European Patent Office
Office européen des brevets

(11) **EP 2 475 960 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(51) Int Cl.:
***G01C 19/56*** *(2012.01)*

(21) Anmeldenummer: **10750135.5**

(22) Anmeldetag: **09.09.2010**

(86) Internationale Anmeldenummer:
**PCT/EP2010/063250**

(87) Internationale Veröffentlichungsnummer:
**WO 2011/029879 (17.03.2011 Gazette 2011/11)**

(54) **DOPPELAXIALER, SCHOCKROBUSTER, DREHRATENSENSOR MIT INEINANDERLIEGENDEN, LINEAR SCHWINGENDEN SEISMISCHEN ELEMENTEN**

DOUBLE-AXIAL, IMPACT-RESISTANT YAW RATE SENSOR COMPRISING NESTED, LINEARLY OSCILLATING SEISMIC ELEMENTS

CAPTEUR DE VITESSE DE ROTATION BI-AXIAL, RÉSISTANT AUX CHOCS, POURVU D'ÉLÉMENTS SISMIQUES IMBRIQUÉS À OSCILLATION LINÉAIRE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.09.2009 DE 102009029311**
**09.09.2009 DE 102009029310**

(43) Veröffentlichungstag der Anmeldung:
**18.07.2012 Patentblatt 2012/29**

(73) Patentinhaber: **Continental Teves AG & Co. OHG**
**60488 Frankfurt am Main (DE)**

(72) Erfinder:
• GÜNTHNER, Stefan
**60439 Frankfurt am Main (DE)**
• LOHMANN, Jasmin
**64753 Brombachtal (DE)**
• SCHMID, Bernhard
**61169 Friedberg (DE)**
• SIVARAMAN, Ramnath
**122001 Gurgaon (IN)**

(56) Entgegenhaltungen:
WO-A1-03/064975          DE-A1- 4 428 405
DE-A1-102007 030 119     DE-A1-102007 054 505

**Beschreibung**

Die Erfindung betrifft einen mikromechanischen Drehratensensor gemäß Anspruch 1, sowie dessen Verwendung in Kraftfahrzeugen.
Druckschrift WO2008015044 stellt einen Drehratensensor vor, der aus zwei ineinanderliegenden seismischen Elementen besteht, die miteinander über Federn gekoppelt sind. Beide Elemente weisen gleiche Massen auf. In der Antriebsmode schwingen beide Massen in x-Richtung in Antiphase. Die Auslesemode ist gekennzeichnet durch gegenphasige Schwingung der seismischen Massen aus der Substratebene heraus in z-Richtung, so dass Drehraten um die x-Achse detektiert werden können. Beide Moden sind aufgrund des Massengleichgewichts und aufgrund der Tatsache, dass ihre Schwerpunkte aufeinander liegen weder durch lineare noch durch rotatorische Störungen direkt anregbar. Dennoch existieren auch die Modenformen, in der beide Massen in gleicher Phase in, bzw. aus der Ebene heraus schwingen. Diese gleichphasigen Moden können leicht durch lineare Vibrationen direkt angeregt werden, was zu Beeinträchtigung des Betriebs des Drehratensensors führt. Das Federkonzept führt lediglich zu einer Modenseparation und nicht zu einer Unterdrückung der gleichphasigen Moden. Unter seismischen Elementen, werden insbesondere seismische Massen verstanden.
In ähnlicher Weise ist der Sensor aus der Druckschrift US2004/0154398 aufgebaut, wobei die Ausleserichtung in y-Richtung liegt, so dass Drehraten um die z-Achse gemessen werden können. Auch hier besteht der Drehratensensor aus zwei ineinanderliegenden seismischen Elementen, die miteinander über Federn gekoppelt sind. Beide Elemente weisen gleiche Massen auf. In der Antriebsmode schwingen beide Massen in x-Richtung in Antiphase. Die Auslesemode ist gekennzeichnet durch gegenphasige Schwingung der seismischen Massen in y-Richtung, so dass Drehraten um die z-Achse detektiert werden können. Beide Moden sind aufgrund des Massengleichgewichts und aufgrund der Tatsache, dass ihre Schwerpunkte aufeinander liegen weder durch lineare noch durch rotatorische Störungen direkt anregbar. Dennoch existieren auch die Modenformen, in der beide Massen in gleicher Phase in x-, bzw. y-Richtung schwingen. Diese gleichphasigen Moden können leicht durch lineare Vibrationen direkt angeregt werden, was zu Beeinträchtigung des Betriebs des Drehratensensors führt. Das Federkonzept führt lediglich zu einer Modenseparation und nicht zu einer Unterdrückung der gleichphasigen Moden.
Die Druckschrift WO2004097432, WO2008021534, DE102006052522, DE102005051048, US 6892575, EP1832841, WO2008051677 beschreiben Sensoren, die gleichzeitig Drehbewegungen um die x- und um die y-Achse messen können - also keine Drehbewegungen senkrecht zur Waferebene. Die erwähnten Sensorprinzipien sind Ein-Chip-Lösungen; d.h. die Sensorelemente zur Messung der orthogonalen Drehraten befinden sich auf demselben monolithischen Siliziumchip. Ferner ist ihnen gemeinsam, dass für beide sensitiven Achsen nur eine einzige Primärbewegung angeregt wird. Das erspart regelungstechnischen Aufwand; ferner ist die Chipfläche kleiner als bei zwei separaten Sensoren. Im Falle einer Coriolis-Kraft aufgrund einer Drehbewegung um die x-, bzw. y-Achse werden Oszillationen mit Bewegungsanteilen in z-Richtung angeregt. Will man mit diesen Sensoren Drehgeschwindigkeiten um die z-Achse messen, muss man die Sensoren durch Aufbau- und Verbindungstechnik aufstellen, also um 90° zur planaren Vorzugsrichtung - der Waferebene - montieren. Das führt zu zusätzlichen Kosten.
Die Druckschrift DE 4428405 A1 beschreibt einen ein-achsigen Drehratensensor, bei dem eine zweite Masse eine erste Masse umfasst. Beide Massen sind über elastische Federelemente miteinander gekoppelt. Dadurch ergibt sich ein schwingungsfähiges System, das an ein Substrat befestigt ist. Die beiden Massen liegen parallel zu dem Substrat, wobei das schwingungsfähige System dabei lediglich Schwingungen parallel zur Substratebene ausführen kann. Das schwingungsfähige System wird durch Aktoren in eine Richtung parallel zur Substratebene angetrieben. Aufnehmer können eine zweite Schwingung detektieren, die ebenso parallel zur Substratebene verläuft und vorzugsweise orthogonal zur Antriebsrichtung. Nachteilig ist, dass der Drehratensensor somit nur durch Corioliskräfte hervorgerufene Auslenkungen detektieren kann, die aufgrund einer Drehung um die Hochachse des Substrats angeregt werden.
Die Druckschrift WO 03/064975 A1 beschreibt ebenfalls einen ein-achsigen Drehratensensor. Auch hier umfasst eine zweite Masse eine erste Masse, die parallel zu einem Substrat angeordnet sind. Eine Antriebseinrichtung treibt die Massen zu einer Schwingung entlang einer ersten Achse an, die parallel zu der Substratebene verläuft. Eine Erfassungseinrichtung nimmt Auslenkungen der beiden Massen auf, die entlang einer zweiten Achse verlaufen. Die zweite Achse steht senkrecht zur ersten, wobei beide Achsen parallel zur Substratebene verlaufen. Die Auslenkungen entlang der zweiten Achse ergeben sich aufgrund der Coriolis-Kraft. Aufgrund des Aufbaus fallen die Schwerpunkte der Massen und der Erfassungseinrichtungen im Ruhezustand in einem gemeinsamen Massenschwerpunkt zusammen.
Die Druckschrift DE 102007054505 A1 beschreibt einen zweiachsigen Drehratensensor, bei dem mehrere bewegliche Einheiten parallel zu einem Substrat angeordnet sind. Die beweglichen Einheiten sind an ein zentrales Federelement gekoppelt. Eine Antriebsvorrichtung treibt die beweglichen Einheiten zu einer gegenphasigen Schwingung entlang einer ersten Achse an, die parallel zu dem Substrat ist. Erfassungseinheiten detektieren Auslenkungen, die durch eine Corioliskraft verursacht werden. Jede der beweglichen Einheiten besitzt eine Coriolis-Masse, wobei die Coriolis-Massen dabei jeweils von einem Rahmen umfasst sind. Anhand einer ersten Coriolis-Masse kann eine Drehrate um eine erste Achse sowie anhand einer zweiten Coriolis-Masse eine Drehrate um eine zweite Achse erfasst werden. Die drei Achsen stehen senkrecht zueinander.

Die Druckschrift DE 102007030119 A1 beschreibt einen zweiachsigen Drehratensensor, bei dem mehrere seismische Massen parallel zu einem Substrat liegen. Die beiden Massen werden durch mehrere Antriebseinrichtungen zu einer gegenphasigen Schwingung ausgelenkt. Die Vorrichtung besteht aus 4 analogen Einzelstrukturen, von denen jede eine eigene Coriolis-Masse, Anregungseinheit und Erfassungseinheit sowie mehrere Federelemente besitzt. Die Antriebseinrichtungen jeder Einzelstruktur sind über x-Federelemente am Substrat befestigt. Die seismischen Massen sind über y-Federelemente jeweils mit den Antriebseinrichtungen befestigt. Die seismischen Massen sind über x-Dreh-Federelemente mit den Ausleseeinrichtungen befestigt. Die Antriebseinrichtungen sind mittels Koppel-Federelementen verbunden. Die Ausleseeinrichtungen sind mittels Koppel-Federelementen verbunden.

In der Patentschrift EP 1918723 B1 wird ein Gyroskop vorgestellt, das gleichzeitig Drehbewegungen um die x- und um die z-Achse messen kann. Auch hierbei handelt es sich um eine Ein-Chip-Lösung mit einer einzigen Primärmode. Dieser Sensor hat allerdings den Nachteil, dass die beide Auslesemoden - auch Sekundär- (Detektion der Drehung um die z-Achse) und Tertiärmode (Detektion der Drehung um die x-Achse) genannt - direkt durch Rotationsbewegungen angeregt werden können, was zu Störempfindlichkeit des Sensors gegenüber Umwelteinflüssen führt.

Druckschrift WO9817973A1 stellt ein dreiachsiges Gyroskop vor. Dabei schwingen in der Antriebsmode vier um jeweils 90° versetzte Massen in radialer Richtung. Diese Anordnung kann Corioliskräfte in alle drei Raumrichtungen unterscheiden. Jedoch sind die einzelnen Massen nicht direkt miteinander verbunden, so dass es beispielsweise bei Linearbeschleunigungen senkrecht zur Substratebene zu Auslenkung der einzelnen Massen aus der Substratebene kommt.

Die Erfindung hat sich die Aufgabe gestellt, einen mikromechanischen Drehratensensor vorzuschlagen, der Drehraten um zumindest zwei sensitive Achsen erfassen kann und dabei relativ robust gegenüber Störungen ausgelegt ist.

Diese Aufgabe wird erfindungsgemäß gelöst durch den mikromechanischen Drehratensensor gemäß Anspruch 1.

Der Erfindung liegt bevorzugt der Gedanke zu Grunde, einen mikromechanischen Drehratensensor vorzuschlagen, umfassend ein Substrat, dessen Grundfläche parallel zur x-y Ebene eines kartesischen Koordinatensystems ausgerichtet ist, wobei der Drehratensensor zumindest eine erste und eine zweite seismische Masse aufweist, die mit wenigstens einer ersten Antriebseinrichtung so gekoppelt sind und die so aufgehängt sind, dass sie in einer Antriebsmode gegenphasig auslenkend angetrieben werden, wobei der Drehratensensor so ausgebildet ist, dass er Drehraten um zumindest zwei zueinander im Wesentlichen orthogonale sensitive Achsen (z, y) erfassen kann, wobei zumindest die zweite seismische Masse als Rahmen ausgebildet ist, welcher die erste seismische Masse bezüglich der Positionierung in der x-y-Ebene bzw. parallel zur x-y-Ebene zumindest teilweise umfängt bzw. umgreift, insbesondere hinsichtlich einer Ruhelage der seismischen Massen.

Der Rahmen der zweiten seismischen Masse ist bevorzugt geschlossen ausgebildet oder alternativ vorzugsweise offen, also er umgreift die erste seismische Masse nicht vollständig.

Die erste seismische Masse liegt also bevorzugt, zumindest hinsichtlich einer Ruhelage, in der als Rahmen ausgebildeten zweiten seismischen Masse.

Es ist bevorzugt, dass zumindest der ersten und der zweiten seismischen Masse jeweils zwei Ausleseeinrichtungen zugeordnet sind.

Unter dem Begriff gegenphasig wird vorzugsweise auch gegenläufig bzw. in gleicher Richtung, linear oder auf einer gekrümmten Bahn, mit zueinander inverser Orientierung verstanden, insbesondere paarweise bezogen jeweils auf ein Paar seismischer Masse, besonders bevorzugt die erste und zweite seismische Masse und jeweils ein Paar der zusätzlichen seismischen Massen.

Die Phase und die Gegenphase werden zweckmäßigerweise jeweils separat erfasst, insbesondere durch jeweils separate Ausleseeinrichtungen.

Die wenigstens eine Antriebseinrichtung und/oder die zumindest eine Ausleseeinrichtung sind bevorzugt als kapazitive Kammstrukturen oder Plattenstrukturen ausgebildet, wobei die Antriebseinrichtung elektrostatisch anregt und die Ausleseeinrichtung elektrostatisch erfasst.

Es ist bevorzugt, dass die erste und zweite seismische Masse mittels wenigstens einer ersten und einer zweiten Kopplungseinrichtung miteinander so gekoppelt sind, dass sie beim Erfassen einer ersten Drehrate um die erste sensitive Achse in einer ersten Auslesemode gegenphasig schwingen und dass sie beim Erfassen einer zweiten Drehrate um die zweite sensitive Achse in einer zweiten Auslesemode ebenfalls gegenphasig schwingen. Die erste und die zweite Kopplungseinrichtung sind insbesondere verschieden ausgebildet. Besonders bevorzugt umfasse der Drehratensensor mehrere erste und mehrere zweite Kopplungseinrichtungen, also jeweils mehrere Kopplungseinrichtungen erster und zweiter Art, aus Symmetriegründen. Ganz besonders bevorzugt weist der Drehratensensor vier erste Kopplungseinrichtungen auf, welche beispielsweise die gegenphasige Antriebsmode und die zweite Auslesemode koppeln sowie zwei zweite Kopplungseinrichtungen.

Es ist zweckmäßig, die erste und zweite Kopplungseinrichtung jeweils zumindest einen im Wesentlichen starr ausgebildeten Kopplungsbalken umfassen, welcher durch Federelemente einerseits mit der ersten seismischen Masse und andererseits mit der zweiten seismischen Masse gekoppelt ist und welcher insbesondere an mindestens einem Torsionsfederelement aufgehängt ist, welches so ausgelegt ist, dass es rotatorische Auslenkungen des Kopplungsbalkens um 1 oder 2 Achsen ermöglicht und weitere rotatorische Auslenkungen und sämtliche translatorische Auslenkungen des Kopplungsbalkens unterdrückt.

Dem wenigstens einen Kopplungsbalken zumindest einer der Kopplungseinrichtungen, insbesondere der ersten Kopplungseinrichtung, insbesondere jeder ersten Kopplungseinrichtung, sind bevorzugt zwei oder mehr Ausleseeinrichtungen zugeordnet sind, welche so ausgebildet und angeordnet sind, dass sie die rotatorische Auslenkung dieses Kopplungsbalkens bezogen auf die erste oder zweite Auslesemode in Phase und Gegenphase erfassen, dabei eine von ihnen in Phase und die andere in Gegenphase.

Es ist bevorzugt, dass dieser Kopplungsbalken im Wesentlichen c-förmig ausgebildet ist, insbesondere mit einer Grundfläche im Wesentlichen parallel zur x-y-Ebene in einem Ruhezustand, mit wenigstens zwei Randsegmenten und einem Verbindungssegment, wobei das Verbindungssegment im Wesentlichen mittig mit dem Torsionsfederelement verbunden ist und so die beiden Randsegmente gegenphasig rotatorisch auslenkbar sind, wobei dieses Torsionsfederelement nicht völlig steif zumindest hinsichtlich einer parasitären rotatorischen Auslenkung um die y-Achse ist, weshalb die beiden diesem Kopplungsbalken zugeordneten Ausleseeinrichtungen so angeordnet sind, dass sie mit der Mitte ihrer Längsseite, im Wesentlichen in Richtung der Längsseite der beiden Randsegmente, bezüglich der x-y-Ausrichtung jeweils gegenüber der Mitte der Längsseite eines der Randsegmente angeordnet sind, so dass mögliche gleichphasige rotatorische Auslenkungen der beiden Randsegmente um die y-Achse, durch die dann erfolgende Schrägstellung dieser beiden Randsegmente im Wesentlichen nicht durch die beiden Ausleseeinrichtungen erfasst werden, wobei diese beiden Ausleseeinrichtungen insbesondere parallel zu den beiden Randsegmenten in einem Ruhezustand angeordnet sind, jeweils bezogen auf die Grundflächen. Die Biegeauslenkung mit einer z-Richtungskomponente ist dabei eine parasitäre bzw. unerwünschte Auslenkung, beispielsweise hervorgerufen durch eine äußere Störung.

Die Kopplungseinrichtungen umfassen zweckmäßigerweise jeweils zwei Kopplungsbalken.

Die erste und die zweite seismische Masse weisen vorzugsweise eine im Wesentlichen gleiche Masse auf, bezogen auf die Kombination von Volumen und Dichte.

Der Drehratensensor und die erste und die zweite seismische Masse sind bevorzugt so ausgebildet und angeordnet, dass der Schwerpunkt des gesamten Drehratensensors bezüglich der Auslenkungen der seismischen Massen in der Antriebsmode im Wesentlichen in Ruhe bleibt.

Es ist bevorzugt, dass der Drehratensensor so ausgebildet ist, dass die erste sensitive Achse in der x-y-Ebene, also in der Grundfläche des Substrats liegt, insbesondere dass die erste sensitive Achse parallel zur x-Achse oder zur y-Achse ausgebildet ist, und dass die zweite sensitive Achse parallel zur z-Achse, also senkrecht zur Grundfläche des Substrats, ausgebildet ist.

Es ist zweckmäßig, dass die erste und zweite seismische Masse des Drehratensensors so ausgebildet, aufgehängt und mittels zumindest der ersten und zweiten Kopplungseinrichtung gekoppelt sind, dass sie ausschließlich beweglich aufgehängt sind für ihre jeweiligen Auslenkungen innerhalb der Antriebsmode, für ihre jeweiligen Auslenkungen innerhalb der ersten Auslesemode und für ihre jeweiligen Auslenkungen innerhalb der zweiten Auslesemode, und dass die erste und zweite seismischen Masse bezüglich aller anderen Auslenkungen steif aufgehängt sind, also alle Auslenkungen in andere Richtungen und sämtliche gleichphasige Auslenkungen der ersten und zweiten seismischen Masse unterdrückt werden.

Es ist bevorzugt, dass die erste Kopplungseinrichtung so ausgebildet ist, dass sie gegenphasige Auslenkungen der seismischen Massen hinsichtlich der Antriebsmode erzwingt und gleichphasige Auslenkungen diesbezüglich unterdrückt und dass die erste und die zweite Kopplungseinrichtung so ausgebildet sind, dass sie gegenphasige Auslenkungen der seismischen Massen hinsichtlich der ersten und hinsichtlich der zweiten Auslesemode erzwingen und gleichphasige Auslenkungen diesbezüglich unterdrücken, insbesondere sämtliche gleichphasige Auslenkungen der ersten und zweiten seismischen Masse unterdrücken.

Es ist bevorzugt, dass die Auslenkung der ersten und zweiten seismische Masse, in jeder der wenigstens zwei Auslesemoden doppelt differentiell erfasst wird, wobei bezüglich der gegenphasigen Auslenkung, also der einen seismischen Masse in Phase und der anderen seismischen Masse in Gegenphase, jeweils die Auslenkung einer der beiden seismischen Massen durch zwei Ausleseeinrichtungen gegenläufig erfasst werden, also der ersten und zweiten seismischen Masse und/oder den mit zumindest einer der seismischen Massen mitausgelenkten Einrichtungen sind jeweils mindestens zwei Ausleseeinrichtungen zugeordnet, welche jeweils insbesondere so ausgebildet und angeordnet sind, dass eine dieser beiden Ausleseeinrichtungen eine Kapazitätsvergrößerung erfasst, wenn die andere Ausleseeinrichtung eine Kapazitätsverringerung erfasst.

Zweckmäßigerweise sind zwei oder mehr Ausleseeinrichtungen miteinander verbunden oder in ein gemeinsames Ausleseeinrichtungssystem integriert.

Der Drehratensensor ist vorzugsweise monolithisch bzw. auf einem einzigen Chip bzw. einstückig ausgebildet, weshalb die Ausrichtung beider sensitiver Achsen zueinander wesentlich genauer erfolgen kann, als bei der Aufteilung auf zwei Chips zur Sensierung von Drehraten um unterschiedliche Achsen, da die Ausrichtung der Achsen durch die mikromechanische Herstellung definiert ist, die um Größenordnungen präziser ist im Vergleich zu konventioneller Aufbau- und Verbindungstechnik, mit der zwei separate Sensoren zueinander ausgerichtet werden können. Ferner ist auch die Handhabung eines Ein-Chip-Sensorelementes, das Drehbewegungen um zwei sensitive Achsen erfassen kann, einfacher als die Handhabung zweier separater Sensorelemente.

Der Drehratensensor weist bevorzugt eine einzige Antriebseinrichtung auf, welche die erste und die zweite seismische Masse des Drehratensensors gegenphasig, gemeinsam antreibt, wozu die seismischen Massen entsprechend aufgehängt und insbesondere durch die erste Kopplungseinrichtung miteinander gekoppelt sind. Hierdurch wird der regelungstechnische Aufwand geringer im Vergleich zu zwei separaten Sensoren mit zwei getrennten Antriebseinheiten, da während der gesamten Betriebszeit die Antriebsschwingung bzw. Antriebsmode (auch Primärschwingung genannt) aufrechterhalten werden muss, wozu oft eine Phase-Locked-Loop, sowie eine Amplitudenregelung notwendig sind. Eine einzige Antriebseinrichtung ermöglicht signifikante Einsparungen an ASIC-Fläche und Stromverbrauch bzw. Energieverbrauch und damit kostengünstigere Signalverarbeitungs. Ferner lässt sich durch die gemeinsame Nutzung einer einzigen Antriebseinheit Platz sparen, so dass mehr Sensoren auf einem Siliziumwafer Platz finden und so die Sensoren kostengünstiger hergestellt werden können.

Die wenigstens eine Antriebseinrichtung, insbesondere die eine einzige Antriebseinrichtung, ist bevorzugt mit der ersten oder der zweiten seismischen Masse, besonders bevorzugt mit der ersten seismischen Masse, starr verbunden.

Es ist bevorzugt, dass die wenigstens eine Antriebseinrichtung mit der ersten oder der zweiten seismischen Masse mittels zumindest eines Federelements so gekoppelt ist, dass eine translatorische Kopplung in Antriebsrichtung zwischen Antriebseinheit und erster oder zweiter seismischer Masse erfolgt und eine Entkopplung in alle anderen zumindest translatorischen Richtungen erfolgt.

Die Antriebseinrichtung ist zweckmäßigerweise zusätzlich am Substrat durch zumindest ein weiteres Federelement, beispielsweise an einem Anker am Substrat, aufgehängt. Diese Aufhängung ist dabei in der x-y-Ebene und dabei senkrecht zur Antriebsrichtung steif ausgebildet, so dass Auslenkungen der Antriebsrichtung in der x-y-Ebene, mit von der Antriebsrichtung abweichender Richtung, unterdrückt werden.

Wenn die Ausführbarkeit von Auslenkungen bzw. Schwingungen, beispielsweise mit "ausschließlich" oder "nur", eingeschränkt ist bzw. wird, sind alle anderen Bewegungen zweckmäßigerweise nicht möglich. Wenn beispielsweise nur lineare Auslenkungen in y-Richtung möglich sind, sind sämtliche rotatorische Auslenkungsformen nicht möglich sowie keine Auslenkungen in x- oder z-Richtung.

Unter einer translatorischen Auslenkung oder Schwingung wird bevorzugt eine lineare Auslenkung oder Schwingung verstanden und umgekehrt.

Unter seismischen Elementen, werden insbesondere seismische Massen verstanden und umgekehrt.

Die Erfindung bezieht sich auch auf ein Verfahren zur Herstellung des mikromechanischen Drehratensensors.

Die Erfindung betrifft außerdem die Verwendung des Drehratensensors in Kraftfahrzeugen, insbesondere zur Erfassung der Gierrate, also einer Drehung um die Hochachse des Fahrzeugs, und zur Erfassung einer Rollrate oder einer Nickrate. Ergänzend oder alternativ vorzugsweise findet diese Anordnung Anwendung bei der gleichzeitigen Messung von Gierrate und Rollrate, Gierrate und Nickrate oder Rollrate und Nickrate in Fahrzeugen. Diese Informationen dienen zur Erfassung und Kontrolle von fahrdynamischen Situationen in ESP-, Insassenschutz- und Komfortregelungssystemen. Sensoren, die in diesem Bereich eingesetzt werden, müssen hohe Genauigkeit der Drehratenmessung und möglichst geringes Signal-RauschVerhältnis liefern. Eine weitere Anforderung an diese Sensoren ist hohe Stabilität unter externen Störungen, wie mechanische Vibrationen und Schocks. Der hier vorgestellte Sensor ist vorzugsweise so ausgelegt, dass er all diese Forderungen, insbesondere aber die Vibrationsrobustheit, erfüllen kann.

Weitere bevorzugte Ausführungsformen ergeben sich aus den nachfolgenden Beschreibungen von Ausführungsbeispielen an Hand von Figuren.

Es zeigen beispielhaft, in schematischer Darstellung

Fig. 1  einen dualaxialen Drehratensensor - Ausführungsbeispiel 1- aus perspektivischer Sicht,

Fig. 2  Ausführungsbeispiel 1- Draufsicht,

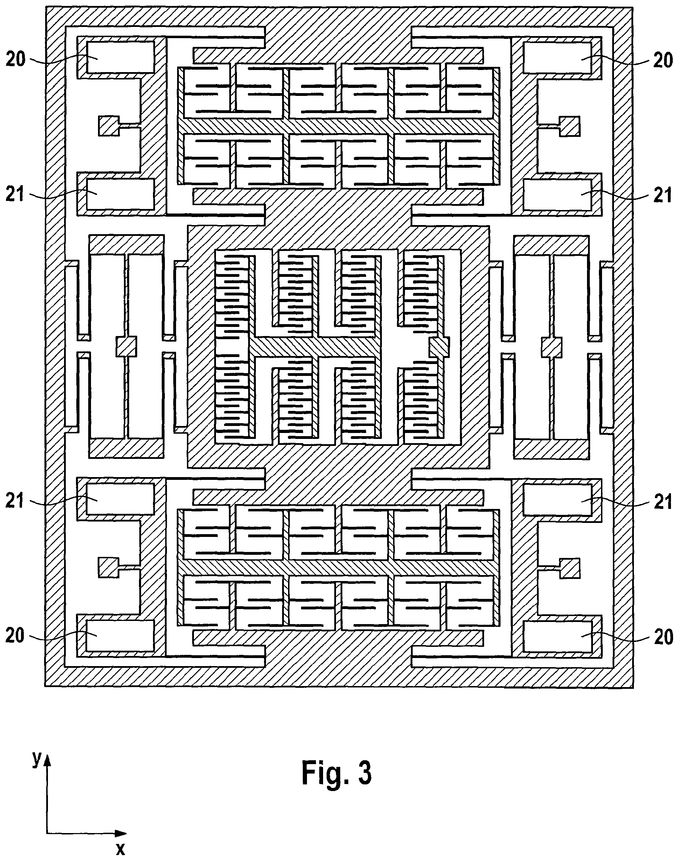

Fig. 3  Ausführungsbeispiel 1 mit alternativer Detektion, aus der Draufsicht,

Fig. 4  Ausführungsbeispiel 1, Primärmode bzw. Antriebsmode mit Ausleseeinrichtungen,

Fig. 5  Ausführungsbeispiel 1, Primärmode bzw. Antriebsmode ohne Ausleseeinheiten bzw. Ausleseeinrichtungen,

Fig. 6  Ausführungsbeispiel 1 - Sekundärmode bzw. erste Auslesemode,

Fig. 7  Ausführungsbeispiel 1 - Tertiärmode bzw. zweite Auslesemode,

Fig. 8  Ausführungsbeispiel 1- gleichphasige Tertiärmode als parasitäre, unerwünschte Mode,

Fig. 9  Ausführungsbeispiel 1- gleichphasige, parasitäre, rotatorische Auslenkungen der beiden Randsegmente des Kopplungsbalkens um die y-Achse - unempfindliche Detektionselektroden bzw. Ausleseeinrichtungen, welche einem c-förmigen Kopplungsbalken der ersten Kopplungseinrichtung zugeordnet sind,

Fig. 10    Ausführungsbeispiel 1 mit Antrieb, Antriebskontrolle und Trimstrukturen,

Fig. 11    Dualaxialer Drehratensensor - Ausführungsbeispiel 2- Draufsicht,

Fig. 12    Ausführungsbeispiel 2 - Primärmode bzw. Antriebsmode,

Fig. 13    Ausführungsbeispiel 2 - Sekundärmode bzw. erste Auslesemode,

Fig. 14    Ausführungsbeispiel 2 - Tertiärmode bzw. zweite Auslesemode,

Fig. 15    Dualaxialer Drehratensensor - Ausführungsbeispiel 3 -Draufsicht,

Fig. 16    Ausführungsbeispiel 3 - Primärmode bzw. Antriebsmode,

Fig. 17    Ausführungsbeispiel 3 - Sekundärmode bzw. erste Auslesemode, und

Fig. 18    Ausführungsbeispiel 3 - Tertiärmode bzw. bzw. zweite Auslesemode.

Ausführungsbeispiel 1:

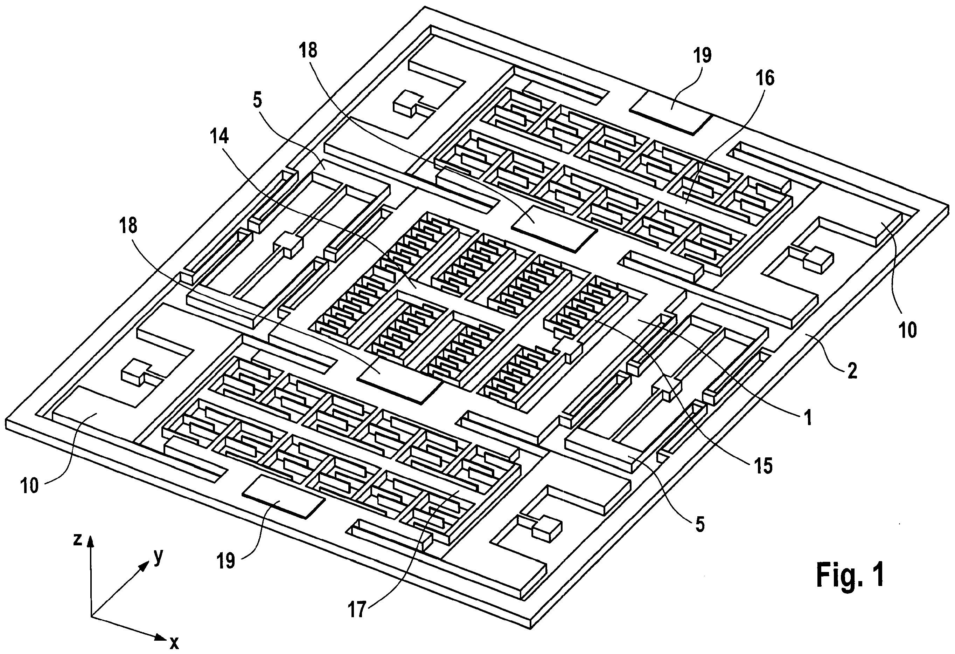

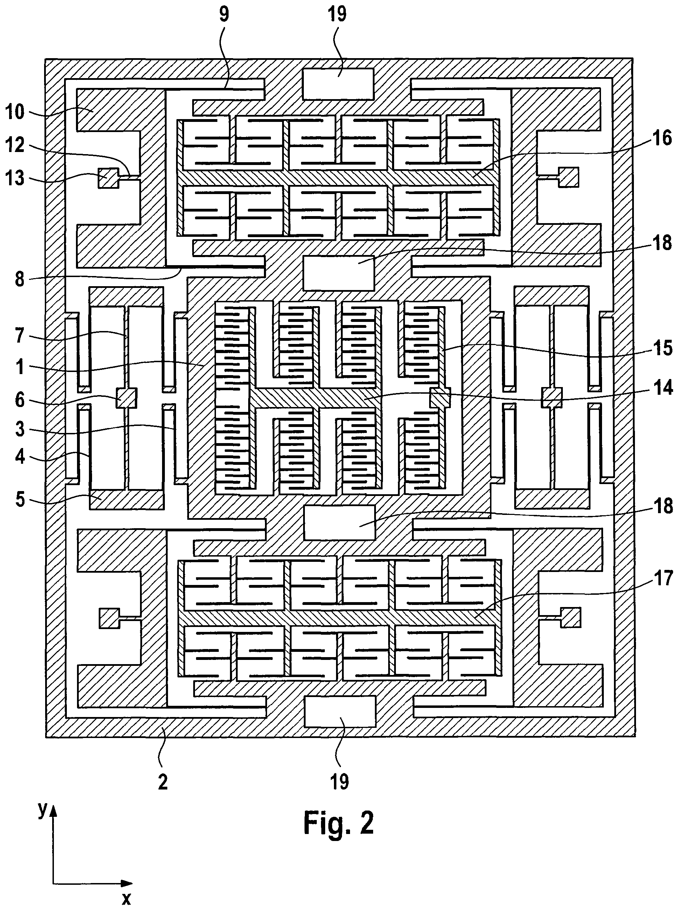

In Fig. 1 und Fig. 2 ist ein Drehratensensor abgebildet, der sowohl Drehgeschwindigkeiten bzw. Drehraten um die z-Achse, als zweite sensitive Achse, als auch um die y-Achse, als erste sensitive Achse, erfassen kann. Der Sensor besteht aus zwei seismischen Elementen bzw. seismischen Massen 1 und 2, die so angeordnet sind, dass die Koordinaten ihrer Massenschwerpunkte zusammenfallen. Die Massen beider seismischen Massen 1 und 2 sind bespielgemäß gleich, und möglichst symmetrisch bezüglich der durch die Hauptträgheitsachsen aufgespannten Koordinatensystemebenen verteilt. Es kann allerdings auch von Vorteil sein, die Massen der seismischen Elemente leicht zu verstimmen, um unvermeidbare Asymmetrien auszugleichen und damit besseres Vibrationsverhalten zu erreichen. Eine unvermeidbare Asymmetrie ist beispielsweise das tatsächliche, unterschiedliche Steifigkeitsverhalten beider idealerweise unendlich steifen Massen.

Beide Massen sind über Feder-Balken-Elemente bzw. Federelemente 3,4,5,7 und 8,9,10,12 miteinander, bzw. mit SubstratAnkern 6 und 13 verbunden. Die Feder-Balken-Elemente bzw. Federelemente 3,4,5,7 erlauben beiden seismischen Massen 1 und 2 freie Beweglichkeit in x-Richtung, schränken aber die Bewegungsfreiheit in y- und z-Richtung so ein, dass sich die Massen 1, 2 entlang dieser Achsen nur in Gegenphase zueinander bewegen können. Die Feder-Balken-Elemente 8,9,10,12 erlauben beiden Massen 1 und 2 freie Beweglichkeit in y-Richtung, schränken aber die Bewegungsfreiheit in x- und z-Richtung so ein, dass sich die Massen entlang dieser Achsen nur in Gegenphase zueinander bewegen können.

Die Feder-Balkenelemente 3,4,5,7, bzw. 8,9,10,12 enthalten je einen starren Kopplungsbalken 5, bzw. 10, der mit Substrat-Ankern 6, bzw. 13 über Torsionsfederelemente 7, bzw. 12 verbunden ist. Die Torsionsfederelemente 7, bzw. 12 sind steif in Richtung ihrer Längsachse, erlauben aber Rotationen um ihre Längsachse, bzw. um die z-Achse. Idealerweise sind die Torsionsfederelemente 7, bzw. 12 möglichst steif bei Auslenkungen senkrecht zu ihrer Längsachse in der SubstratEbene, bzw. aus der Substratebene heraus. Die Federelemente 7, bzw. 12 greifen näherungsweise am Massenschwerpunkt der Kopplungsbalken 5, bzw. 10 an, wobei die Kopplungsbalken symmetrisch bezüglich der Längsachse der Federelemente 7, bzw. 12 ausgestaltet sind. Dadurch wird gewährleistet, dass die Koppelbalken 5, bzw. 10 in erster Linie Rotationen um die z-Achse, bzw. um die Längsachse der Federelemente 7, bzw. 12 vollführen können und die Auslenkungen an den äußeren Enden der Koppelbalken betragsmäßig gleiche Werte annehmen. Die äußeren Enden des Koppelbalkens 5 sind über Federelemente 3 und 4 mit den seismischen Massen 1 und 2 verbunden. Die äußeren Enden des Koppelbalkens bzw. Kopplungsbalkens 10 sind über Federelemente 8 und 9 mit den Massen 1 und 2 verbunden. Die Federelemente 3 und 4, bzw. 8 und 9 sind bezüglich der Längsachse des Federelementes 7, bzw. 12 möglichst symmetrisch ausgestaltet. Sie erlauben Bewegungen in der Ebene senkrecht zur Längsachse der Federelemente 7, bzw. 12. Sie sind steif in Richtung der Längsachse des Federelementes 7, bzw. 12 und möglichst steif in z-Richtung, so dass die Auslenkungen der äußeren Enden der Koppelbalken mit den Auslenkungen der entsprechenden Massen 1 und 2 übereinstimmen.

Die Feder-Balken-Elemente 3,4,5,7 erlauben also nur gegenphasige lineare Bewegung beider Massen 1 und 2 in y- und z-Richtung, während die Feder-Balken-Elemente 8,9,10,12 nur gegenphasige lineare Bewegung beider Massen 1 und 2 in x- und z-Richtung erlauben. Dadurch sind hauptsächlich folgende Eigenmoden der Massen 1 und 2 möglich:

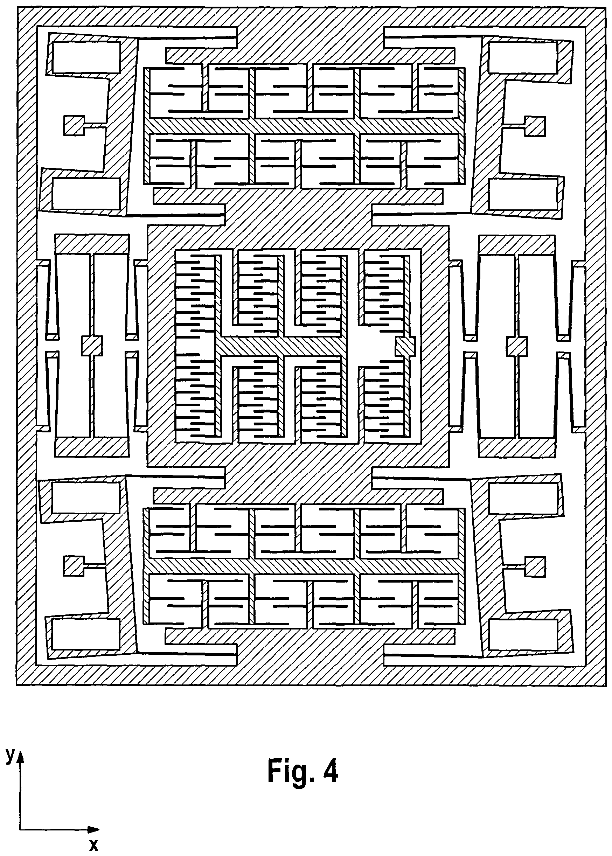

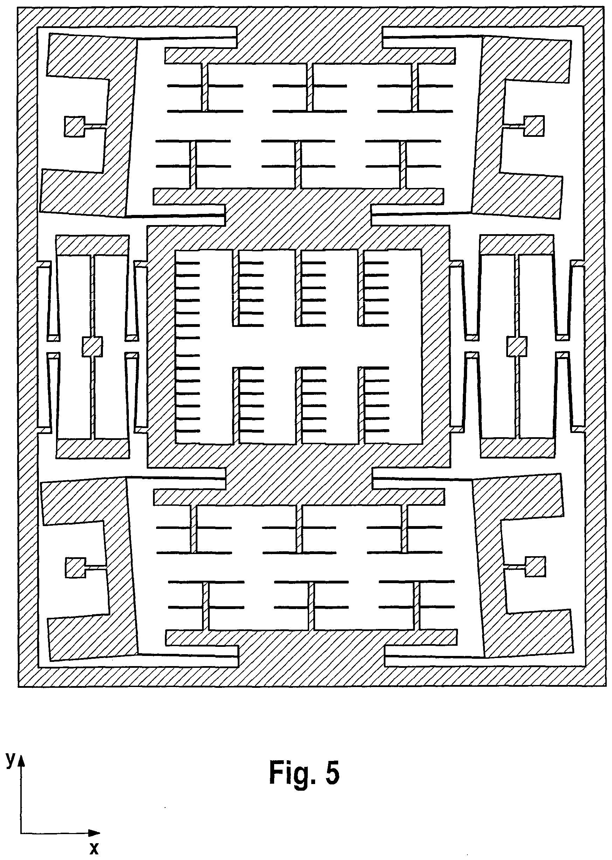

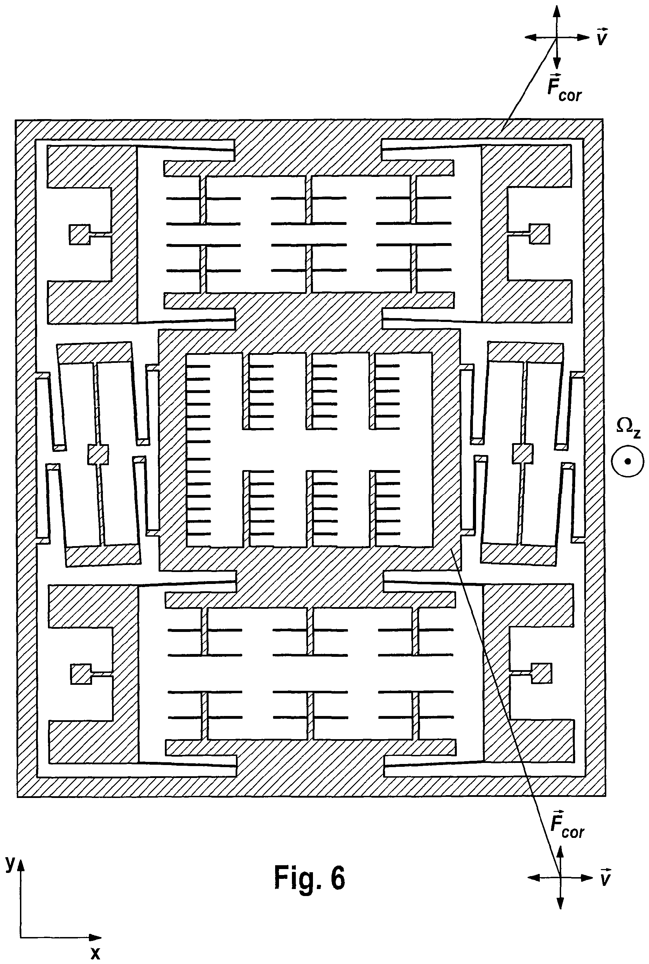

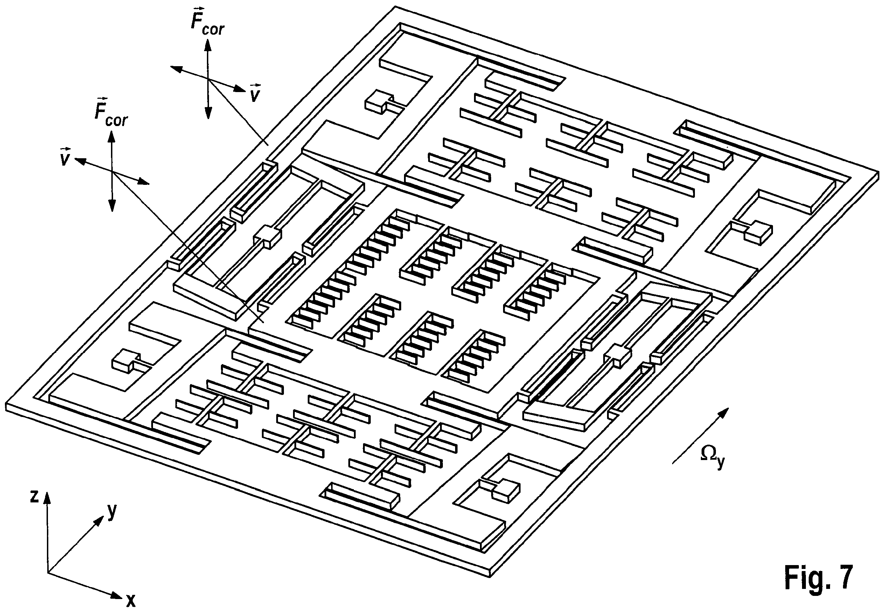

gegenphasige lineare Bewegung in x-Richtung Primärmode, Fig. 4,Fig. 5
gegenphasige lineare Bewegung in z-Richtung Sekundärmode,Fig. 6
gegenphasige lineare Bewegung in y-Richtung Tertiärmode,Fig. 7 .

Funktionsprinzip, Primärmode:

Um Drehgeschwindigkeiten zu messen, muss der Sensor zunächst in der Primärmode, Fig. 5, betrieben werden. Diese ist charakterisiert dadurch, dass die seismischen Massen 1 und 2 in Gegenphase zueinander linear in x-Richtung schwingen; dabei garantieren die Feder-Balken-Elemente 8,9,10,12 und die Massensymmetrie zwischen den seismischen Massen 1 und 2, dass die Amplituden beider Massen betragsmäßig gleich sind. Der Schwerpunkt der gesamten Anordnung bleibt während der Primärbewegung in Ruhe. Der Antrieb der Primärmode kann z.B. über elektrostatische Anregung mithilfe von kapazitiven Kammstrukturen erfolgen.

Sekundär- und Tertiärmode:

Im Falle einer Drehung des Sensors um die z-Achse treten Scheinkräfte auf die bewegten Massen auf. Dabei wirken auf die seismischen Massen 1 und 2 Corioliskräfte mit identischen Amplituden, aber verschiedenen Phasenlagen. Die Phasenbeziehungen leiten sich aus der Phasenlage der Geschwindigkeit der seismischen Massen 1 und 2 während der Primärbewegung ab; die Corioliskräfte wirken so, dass die Sekundärmode angeregt wird, s. Fig. 6. Die Corioliskraft aufgrund einer Rotation $\vec{\Omega}$ eines Massenpunktes m bzgl. eines Inertialsystems, der sich mit einer Geschwindigkeit $\vec{v}$ bzgl des bewegten Koordinatensystems bewegt, lautet:

$$\vec{F}_{cor} = 2\,m\,\vec{v}\times\vec{\Omega}\,.$$

Im Falle einer Drehung des Sensors um die y-Achse treten Scheinkräfte auf die bewegten Massen auf. Dabei wirken auf die seismischen Massen 1 und 2 Corioliskräfte so, dass die Tertiärmode angeregt wird, s. Fig. 7. Die Auslenkungen der Sekundär-, bzw. Tertiärschwingung im Falle einer Corioliskraft ist u. a. proportional zur sie erzeugenden Drehgeschwindigkeit $\Omega_z$, bzw. $\Omega_y$. Die Auslenkungen können z. B. durch kapazitive Elemente erfasst werden, die die mechanische Auslenkung in ein kapazitives Signal wandeln.

Auslesestrukturen bzw. Ausleseeinrichtungen, Sekundärdetektion:

Die Elemente 16 und 17 detektieren Auslenkungen der Massen 1 und 2 in y-Richtung. Die Detektionseinheiten sind realisiert als kapazitive Kammstrukturen - charakterisiert durch die Überlappfläche und den Abstand zwischen beweglicher Struktur und der mit dem Substrat verbundenen Gegenelektrode. Bei Auslenkung der beweglichen Struktur in y-Richtung ändert sich der Plattenabstand und somit die Kapazität. Ein Detektionselement 16, bzw. 17 beinhaltet identische und gleich viele kapazitive Strukturen zu jeder seismischen Masse 1 und 2, die so angeordnet sind, dass bei gegenphasiger Auslenkung der Massen 1 und 2 ein Kapazitätssignal proportional zur Auslenkung erzeugt wird. Das Detektionselement 16, bzw. 17 ist insensitiv gegenüber gleichphasiger Auslenkung der Massen 1 und 2. Die Differenz der kapazitiven Signale 16 und 17 wird dann als Maß für die Stärke der Corioliskraft genommen. Durch diese Art der Differenzbildung werden parasitäre Signale eliminiert, die auf beiden Detektionspfaden in gleicher Phase vorhanden sind, etwa Signale, die durch elektrisches Übersprechen auf beide Pfade entstehen. Diese Art der Auslesung detektiert lediglich die Sekundärmode und ist insensitiv gegenüber anderweitigen Eigenmoden, bei denen sich die Massen 1 und 2 gleichphasig in Richtung der y-Achse bewegen. Andere Anordnung der Kammstrukturen und angepasste Signalauswertung sind auch möglich.

Tertiärdetektion

Die Elemente bzw. Ausleseeinrichtungen 18 und 19 detektieren Auslenkungen der Massen 1 und 2 in z-Richtung und sind so verschaltet, dass die Differenz der Kapazitätsänderungen der Elemente 18 und 19 als Ausgangssignal verwendet wird. Diese Art der Auslesung detektiert lediglich die Tertiärmode und ist insensitiv gegenüber gleichphasigen Bewegungen der Massen 1 und 2 in z-Richtung.

Alternative Tertiärdetektion

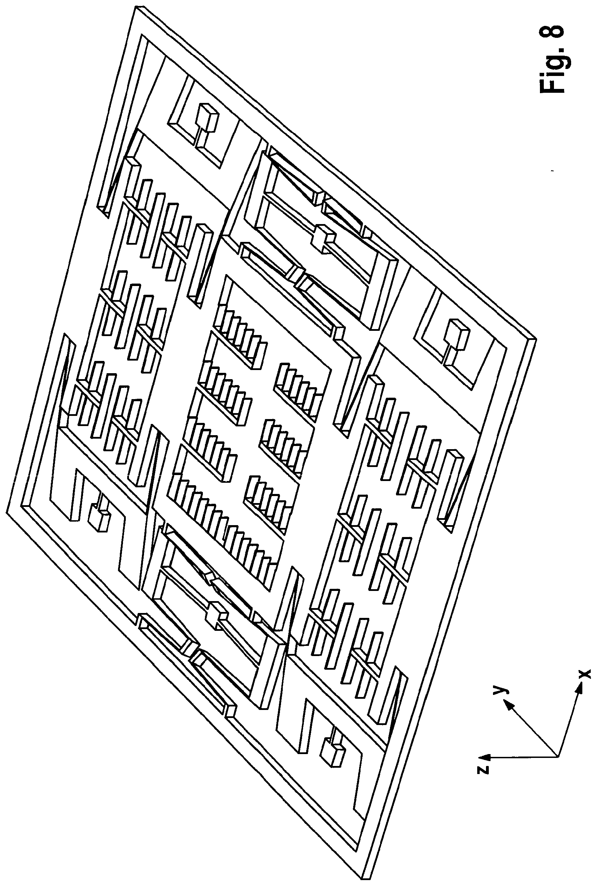

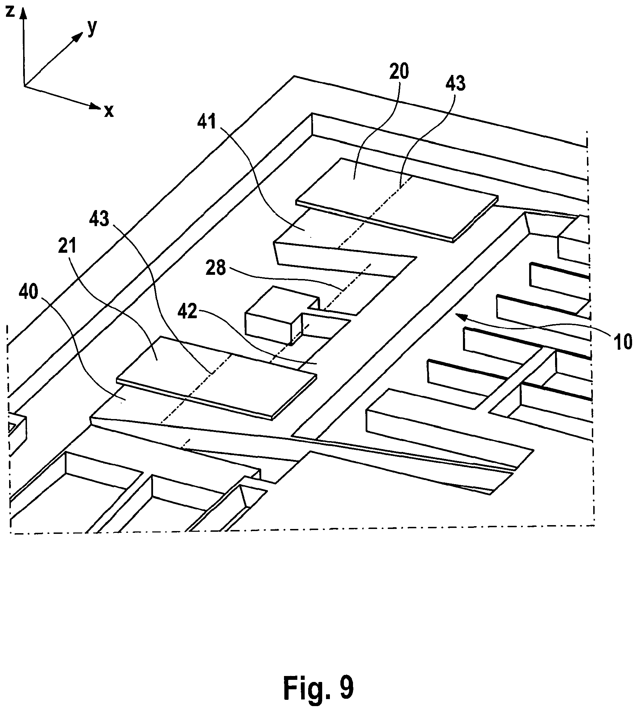

Die Feder-Balken-Anordnung 8,9,10,12 kann einen rechteckigen Kopplungsbalken analog zur Feder-Balken-Struktur 3,4,5,7 besitzen. Im gezeigten Fall ist der Kopplungsbalken allerdings C-förmig ausgestaltet, so dass auf den zusätzlich angebrachten Flächen Ausleselektroden bzw. Ausleseeinrichtungen Platz finden. Die Ausleseeinrichtungen 20 und 21 detektieren Auslenkungen der Koppelbalken 10 in z-Richtung, die bei der Rotation der Koppelbalken 10 um die x-Achse während der Tertiärmode entstehen. Sie sind so verschaltet, dass die Differenz der Kapazitätsänderungen der Elemente 20 und 21 als Ausgangssignal verwendet wird. Diese Art der Auslesung detektiert lediglich die Tertiärmode und ist insensitiv gegenüber gleichphasigen Bewegungen der Massen 1 und 2 in z-Richtung. Die benachbarte Lage der Ausleseelektroden reduziert äußere Störeinflüsse auf die Elektroden selbst, da etwaige Störeinflüsse auf beide Elektroden in gleichem Maße wirken, und durch das Differenzprinzip eliminiert werden. Ferner führt die starre Kopplung der Elektrodengeometrien 20 und 21 durch den Kopplungsbalken zu optimaler Kopplung der Kapazitätssignale.
Ein weiterer Vorteil der Detektionselektroden 20 und 21 in Kombination mit dem C-förmigen Koppelbalken 10 ist, dass diese Auslesestruktur insensitiv gegenüber der gleichphasigen Tertiärmode, Fig. 8, ist. Die gleichphasige Tertiärmode ist, wie bereits erwähnt, durch die gewählte Federanordnung zu hohen Frequenzen hin verschoben. Bei einer gleichphasigen Auslenkung der Federelemente 8 und 9 in z-Richtung wirkt auf den Kopplungsbalken 10 ein Drehmoment um die y-Achse, so dass der Koppelbalken um die y-Achse rotiert. Bei geeigneter Dimensionierung der Feder-Balken-Anordnung 8,9,10,12 und der Elektroden 20 und 21 rotiert der Koppelbalken dabei näherungsweise so um eine Achse parallel zur y-Achse 28, dass durch die Rotation kein Kapazitätssignal erzeugt wird. Die x-Koordinate der Rotationsachse ist dabei durch den Flächenschwerpunkt der Elektroden 20 und 21 gegeben und die z-Koordinate durch den Massenschwerpunkt der beweglichen Struktur, vgl. Fig. 9. Beispielgemäß weist Kopplungsbalken 10, der c-förmig ausgebildet ist, zwei Randsegmente 40, 41 sowie ein Verbindungssegment 42 auf. Die beiden diesem Kopplungsbalken zugeordneten Ausleseeinrichtungen 20, 21 sind so angeordnet, dass sie mit der Mitte 43, ihrer Längsseite, im Wesentlichen in Richtung der Längsseite der beiden Randsegmente 40, 41, bezüglich der x-y-Ausrichtung jeweils gegenüber der Mitte 43 der Längsseite eines der Randsegmente angeordnet sind, so dass mögliche gleichphasige rotatorische Auslenkungen der beiden Randsegmente um die y-Achse, durch die dann erfolgende Schrägstellung dieser beiden Randsegmente im Wesentlichen nicht durch die beiden Ausleseeinrichtungen erfasst werden, wobei diese beiden Ausleseeinrichtungen insbesondere parallel zu den beiden Randsegmenten in einem Ruhezustand angeordnet sind, jeweils bezogen auf die Grundflächen.

Weitere Aktoren & Detektoren

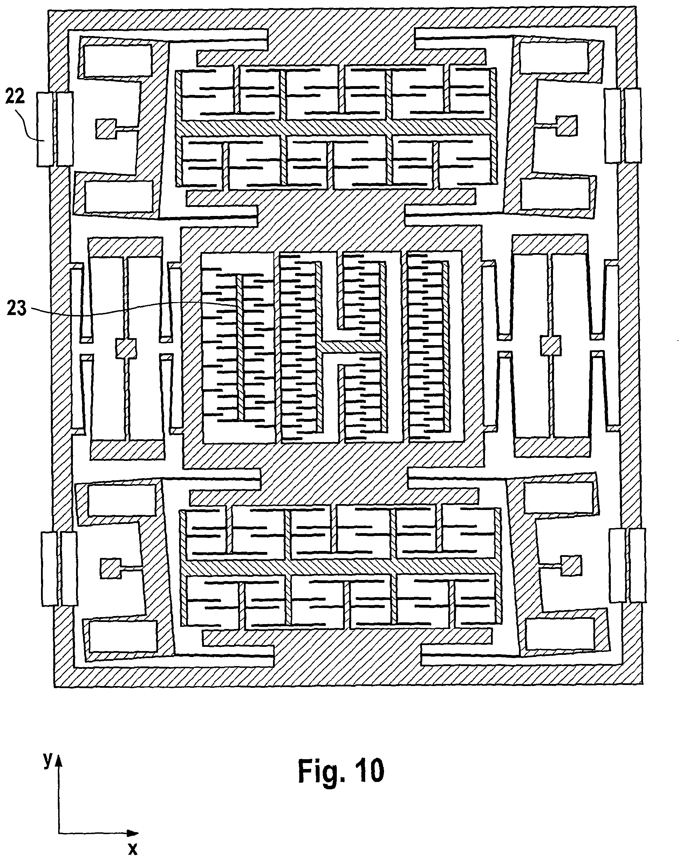

Weitere elektromechanische Strukturen sind zum Betrieb des Sensors notwendig. Dabei sind für den Betrieb Antriebsmittel bzw. eine Antriebseinrichtung 14 notwendig. Diese können direkt an der Masse 1 angreifen, oder an der Masse 2 oder an beiden Massen. Zur Überwachung der Primärschwingung werden in der Regel Antriebskontrollstrukturen 15 verwendet, die wie die Antriebsmittel 14 an der Masse 1 angreifen können, oder an der Masse 2 oder an beiden Massen. Mindestens zwei Antriebskontrollstrukturen können so angeordnet sein, dass die Differenz der Einzelkapazitäten ein Maß für die Auslenkung während der Primärbewegung ist, so dass gleichphasige Bewegung der seismischen Massen in x-Richtung undetektiert bleibt.
Weitere Mittel können dem Sensor angefügt werden zur Unterdrückung von parasitären Signalen ("Quadratur") und/oder zur Beeinflussung der Frequenz und/oder zur Rückstellung von Schwingungen aufgrund der Drehrate ("Force-Feedback"). In Fig. 10 sind derartige Strukturen beispielhaft dargestellt für die Sekundäroszillator 23 und den Tertiäroszillator 22. Ausführungsbeispiel 2 + 3, Aufbau:

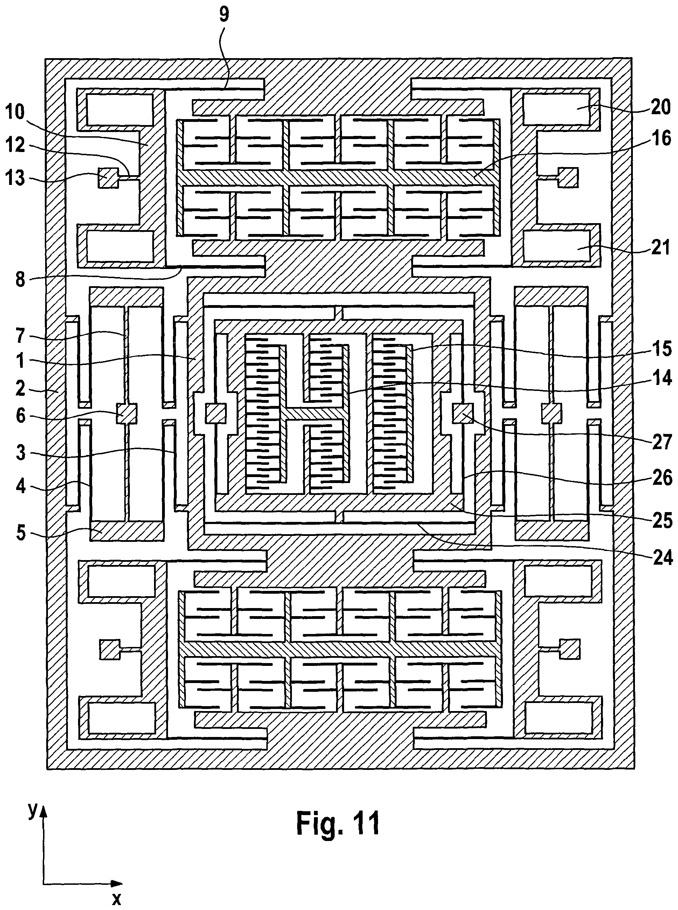

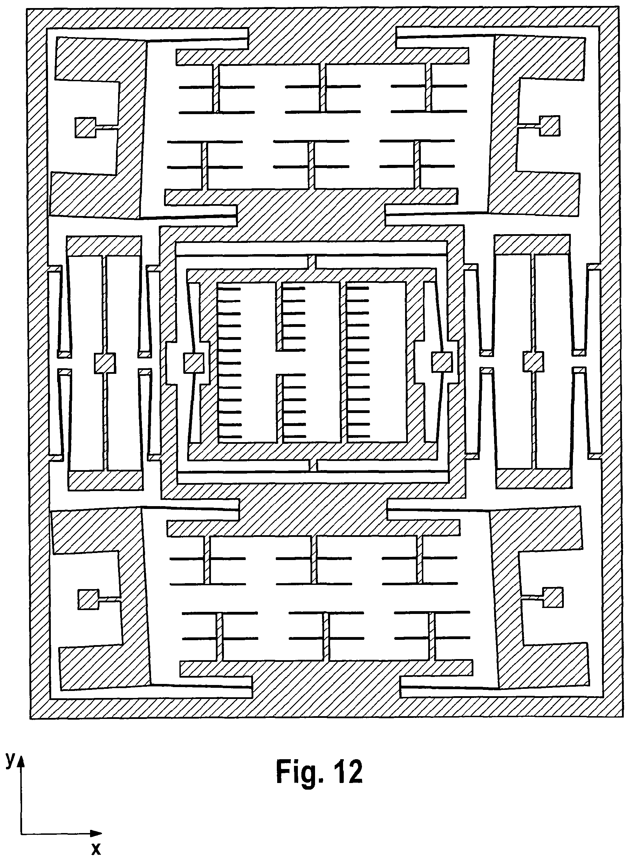

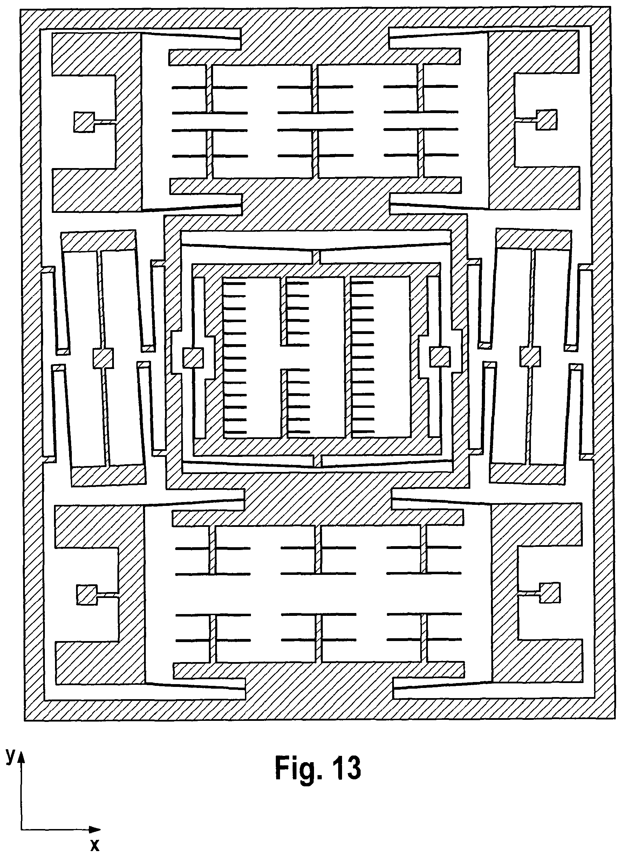

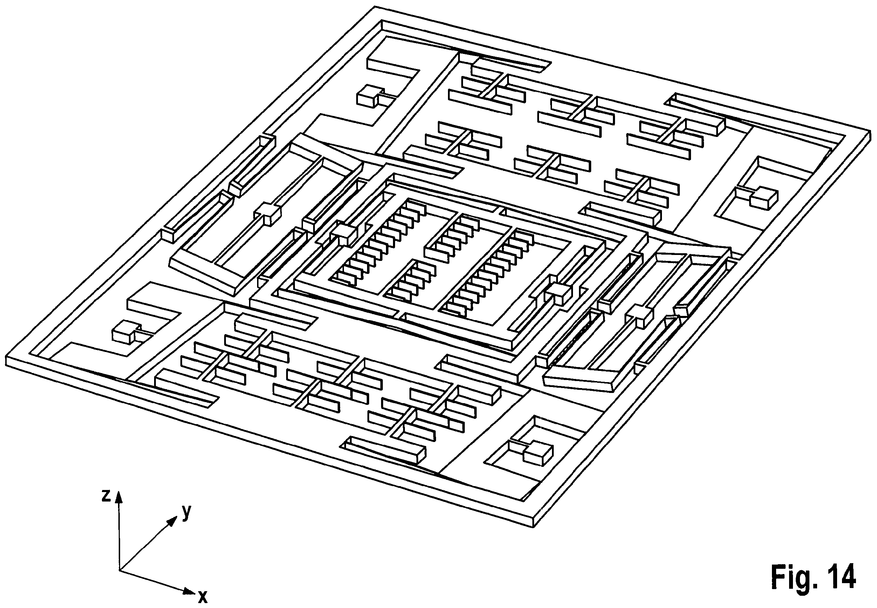

In Fig. 11 ist der in gemäß Ausführungsbeispiel 1 beschriebene Drehratensensor abgebildet, wobei die Antriebseinheit abgekoppelt ist. An die innere seismische Masse 1 ist über Federelemente 24 ein Rahmen angebunden, an dem starr die beweglichen Teile der Antriebs-, bzw. Antriebskontrollstrukturen befestigt sind. Die Federelemente 24 besitzen dabei in Antriebsrichtung x-Achse eine hohe Federsteifigkeit, sind aber in y-, bzw. z-Richtung möglichst weich. Die Antriebseinheit ist ferner über Federelemente 26 an den Substratankern 27 befestigt, wobei die Federelemente 26 Bewegungen in Antriebsrichtung zulassen, aber in y-, bzw. z-Richtung möglichst steif sind. Dies führt dazu, dass die abgekoppelte Antriebseinheit in der Primärbewegung die gleiche Amplitude vollführen kann, wie die innere seismische Masse 1, Fig. 12. In der Sekundär- und Tertiärmode aber bleibt der Antriebsrahmen in Ruhe, vgl. Fig. 13 und Fig. 14.

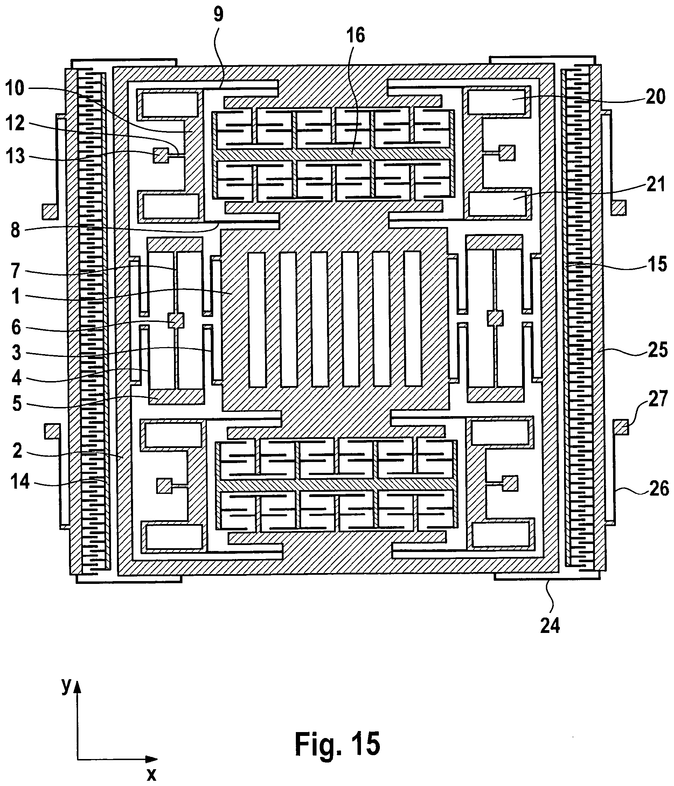

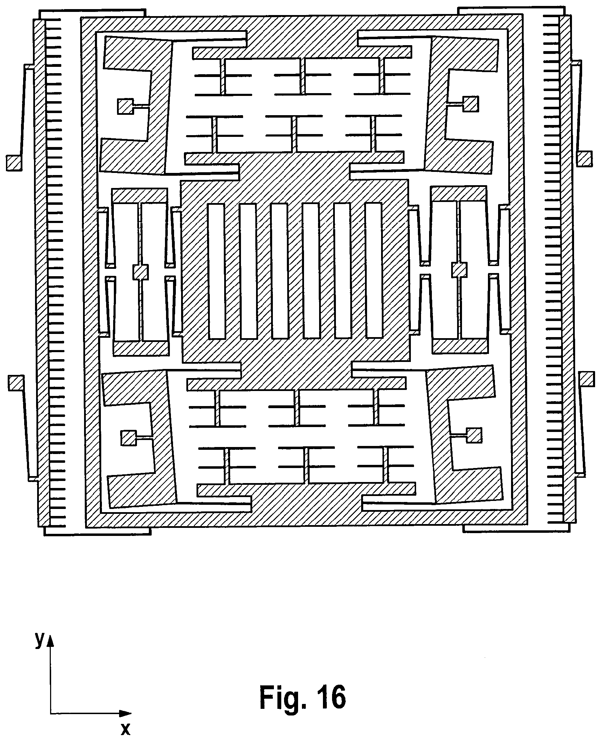

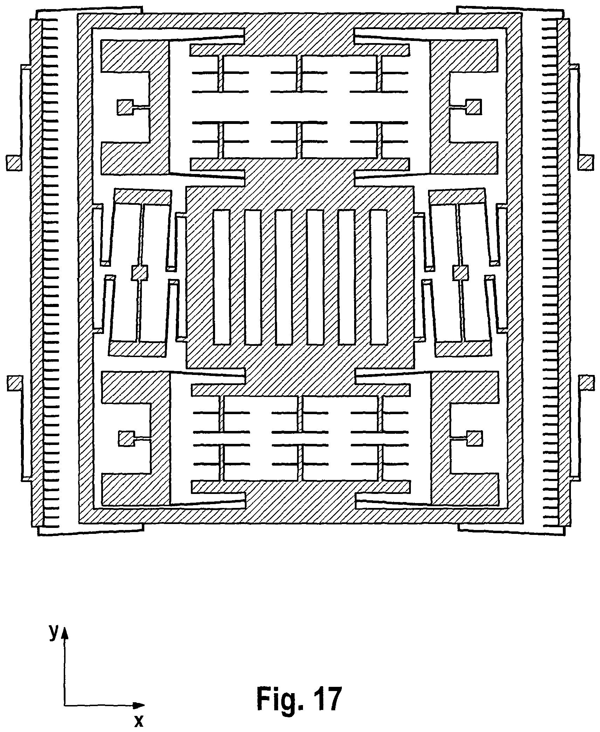

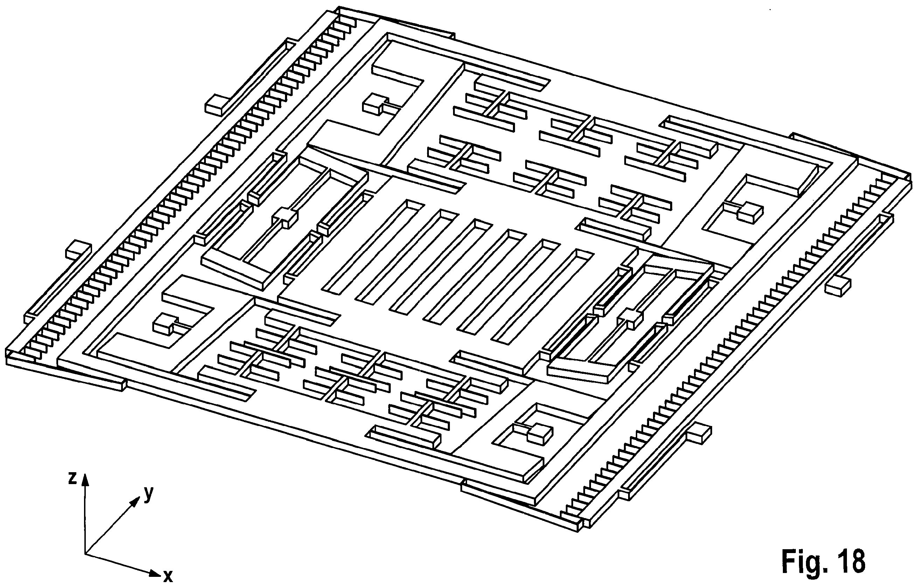

In Fig. 15 ist der in gemäß Ausführungsbeispiel 1 beschriebene Drehratensensor abgebildet, wobei die Antriebseinheit abgekoppelt ist. An die äußere seismische Masse 2 sind über Federelemente 24 Rahmen angebunden, an denen starr die beweglichen Teile der Antriebs-, bzw. Antriebskontrollstrukturen befestigt sind. Die Federelemente 24 besitzen dabei in Antriebsrichtung x-Achse eine hohe Federsteifigkeit, sind aber in y-, bzw. z-Richtung möglichst weich. Die Antriebs- und Antriebskontrolleinheit ist ferner über Federelemente 26 and Substratankern 27 befestigt, wobei die Federelemente 26 Bewegungen in Antriebsrichtung zulassen, aber in y-, bzw. z-Richtung möglichst steif sind. Dies führt dazu, dass die abgekoppelte Antriebseinheit in der Primärbewegung die gleiche Amplitude vollführen kann, wie die äußere Masse 2, Fig. 16. In der Sekundär- und Tertiärmode aber bleibt der Antriebsrahmen in Ruhe, vgl. Fig. 17 und Fig. 18.
Diese Art der Entkopplung hat den besonderen Vorteil, dass Störkräfte, die durch Asymmetrien in den Antriebs(kontroll)strukturen erzeugt werden, nicht direkt auf die Auslesemoden übertragen werden können.

**Patentansprüche**

1.  Mikromechanischer Drehratensensor, umfassend ein Substrat, dessen Grundfläche parallel zur x-y Ebene eines kartesischen Koordinatensystems (x, y, z) ausgerichtet ist, wobei der Drehratensensor zumindest eine erste (1) und eine zweite seismische Masse (2) aufweist, die mit wenigstens einer Antriebseinrichtung (14) so gekoppelt sind und die so aufgehängt sind, dass die erste und die zweite seismische Masse (2) in einer Antriebsmode gegenphasig auslenkend angetrieben werden, wobei der Drehratensensor so ausgebildet ist, dass er Drehraten um zumindest zwei zueinander im Wesentlichen orthogonale sensitive Achsen (z, y; z, x) gleichzeitig erfassen kann, wobei zumindest die zweite seismische Masse (2) als Rahmen ausgebildet ist, welcher die erste seismische Masse (1) bezüglich der Positionierung in der x-y-Ebene zumindest teilweise umfängt, **dadurch gekennzeichnet, dass** die erste seismische Masse (1) und die zweite seismische Masse (2) mittels wenigstens einer ersten Kopplungseinrichtung (3,4,5,7) und einer zweiten Kopplungseinrichtung (8,9,10,12) miteinander derart gekoppelt sind, dass die erste seismische Masse (1) und die zweite seismische Masse (2) beim Erfassen einer ersten Drehrate um die erste sensitive Achse (x;y) in einer ersten Auslesemode gegenphasig schwingen und dass sie beim Erfassen einer zweiten Drehrate um die zweite sensitive Achse (z) in einer zweiten Auslesemode ebenfalls gegenphasig schwingen, wobei die erste (3,4,5,7) und die zweite Kopplungseinrichtung (8,9,10,12) jeweils zumindest einen im Wesentlichen starr ausgebildeten Kopplungsbalken (5,10) umfassen, wobei der Kopplungsbalken (5,10) Federelemente (3,4,8,9) umfasst, wodurch der Kopplungsbalken (5,10) einerseits mit der ersten seismischen Masse (1) und andererseits mit der zweiten seismischen Masse (2) gekoppelt ist, wobei der Kopplungsbalken (5,10) an mindestens einem Torsionsfederelement (7,12) aufgehängt ist, wobei das Torsionsfederelement (7,12) so ausgelegt ist, dass es rotatorische Auslenkungen des Kopplungsbalkens (5,10) um 1 oder 2 Achsen ermöglicht und weitere rotatorische Auslenkungen und sämtliche translatorische Auslenkungen des Kopplungsbalkens (5,10) unterdrückt.

2. Drehratensensor nach Anspruch 1, **dadurch gekennzeichnet, dass** die erste und die zweite seismische Masse eine im Wesentlichen gleiche Masse aufweisen und dass der Drehratensensor so ausgebildet ist und die erste und zweite seismische Masse so ausgebildet und angeordnet sind, dass der Schwerpunkt des gesamten Drehratensensors bezüglich der Auslenkungen der seismischen Massen in der Antriebsmode im Wesentlichen in Ruhe bleibt.

3. Drehratensensor nach Anspruch 1 oder 2, **dadurch gekennzeichnet, dass** der Drehratensensor eine einzige Antriebseinrichtung aufweist, welche die erste und die zweite seismische Masse des Drehratensensors gegenphasig antreibt, wozu die seismischen Massen entsprechend aufgehängt und durch die erste Kopplungseinrichtung miteinander gekoppelt sind.

4. Drehratensensor nach mindestens einem der Ansprüche 1 bis 3, **dadurch gekennzeichnet, dass** der Drehratensensor so ausgebildet ist, dass die erste sensitive Achse (y) in der x-y-Ebene, also in der Grundfläche des Substrats liegt, insbesondere dass die erste sensitive Achse parallel zur x-Achse oder zur y-Achse ausgebildet ist, und dass die zweite sensitive Achse (z) parallel zur z-Achse, also senkrecht zur Grundfläche des Substrats, ausgebildet ist.

5. Drehratensensor nach mindestens einem der Ansprüche 1 bis 4, **dadurch gekennzeichnet, dass** die erste (1) und zweite seismische Masse (2) des Drehratensensors so ausgebildet, aufgehängt und mittels zumindest der ersten (3,4,5,7) und zweiten Kopplungseinrichtung (8,9,10,12) gekoppelt sind, dass sie ausschließlich beweglich aufgehängt sind für ihre jeweiligen Auslenkungen innerhalb der Antriebsmode, für ihre jeweiligen Auslenkungen innerhalb der ersten Auslesemode und für ihre jeweiligen Auslenkungen innerhalb der zweiten Auslesemode, und dass die erste (1) und zweite seismische Masse (2) bezüglich aller Auslenkungen in andere Richtungen und sämtlicher gleichphasiger Auslenkungen der ersten (1) und zweiten seismischen Masse (2)steif aufgehängt sind.

6. Drehratensensor nach mindestens einem der Ansprüche 1 bis 5, **dadurch gekennzeichnet, dass** die Auslenkung der ersten und zweiten seismische Masse, in jeder der wenigstens zwei Auslesemoden doppelt differentiell erfasst wird, wobei bezüglich der gegenphasigen Auslenkung, also der einen seismischen Masse in Phase und der anderen seismischen Masse in Gegenphase, jeweils die Auslenkung einer der beiden seismischen Massen durch zwei Ausleseeinrichtungen gegenläufig erfasst werden, also der ersten und zweiten seismischen Masse und/oder den mit zumindest einer der seismischen Massen mitausgelenkten Einrichtungen sind jeweils mindestens zwei Ausleseeinrichtungen zugeordnet, welche jeweils insbesondere so ausgebildet und angeordnet sind, dass eine dieser beiden Ausleseeinrichtungen eine Kapazitätsvergrößerung erfasst, wenn die andere Ausleseeinrichtung eine Kapazitätsverringerung erfasst.

7. Drehratensensor nach mindestens einem der Ansprüche 1 bis 6, **dadurch gekennzeichnet, dass** die erste Kopplungseinrichtung so ausgebildet ist, dass sie gegenphasige Auslenkungen der seismischen Massen hinsichtlich der Antriebsmode erzwingt und gleichphasige Auslenkungen diesbezüglich unterdrückt und dass die erste und die zweite Kopplungseinrichtung so ausgebildet sind, dass sie gegenphasige Auslenkungen der seismischen Massen hinsichtlich der ersten und hinsichtlich der zweiten Auslesemode erzwingen und gleichphasige Auslenkungen diesbezüglich unterdrücken, insbesondere sämtliche gleichphasige Auslenkungen der ersten und zweiten seismischen Masse unterdrücken.

8. Drehratensensor nach mindestens einem der Ansprüche 1 bis 7, **dadurch gekennzeichnet, dass** wenigstens einem Kopplungsbalken zumindest einer der Kopplungseinrichtungen zwei oder mehr Ausleseeinrichtungen zugeordnet sind, wobei die Ausleseeinrichtungen so ausgebildet und angeordnet sind, dass sie die rotatorische Auslenkung dieses Kopplungsbalkens bezogen auf die erste oder zweite Auslesemode in Phase und Gegenphase erfassen, dabei eine von ihnen in Phase und die andere in Gegenphase.

9. Drehratensensor nach Anspruch 8, **dadurch gekennzeichnet, dass** dieser Kopplungsbalken im Wesentlichen c-förmig ausgebildet ist, insbesondere mit einer Grundfläche im Wesentlichen parallel zur x-y-Ebene in einem Ruhezustand, mit wenigstens zwei Randsegmenten und einem Verbindungssegment, wobei das Verbindungssegment im Wesentlichen mittig mit dem Torsionsfederelement verbunden ist und so die beiden Randsegmente gegenphasig rotatorisch auslenkbar sind, wobei dieses Torsionsfederelement nicht völlig steif zumindest hinsichtlich einer parasitären rotatorischen Auslenkung um die y-Achse ist, weshalb die beiden diesem Kopplungsbalken zugeordneten Ausleseeinrichtungen so angeordnet sind, dass sie mit der Mitte ihrer Längsseite, im Wesentlichen in Richtung der Längsseite der beiden Randsegmente, bezüglich der x-y-Ausrichtung jeweils gegenüber der Mitte der Längsseite eines der Randsegmente angeordnet sind, so dass mögliche gleichphasige rotatorische Auslenkungen der beiden Randsegmente um die y-Achse, durch die dann erfolgende Schrägstellung dieser beiden Randsegmente im Wesentlichen nicht durch die beiden Ausleseeinrichtungen erfasst werden, wobei diese beiden Ausleseeinrichtungen insbesondere parallel zu den beiden Randsegmenten in einem Ruhezustand angeordnet sind, jeweils bezogen auf die Grundflächen.

10. Drehratensensor nach mindestens einem der Ansprüche 1 bis 9, **dadurch gekennzeichnet, dass** die wenigstens eine Antriebseinrichtung mit der ersten oder der zweiten seismischen Masse starr verbunden ist.

11. Drehratensensor nach mindestens einem der Ansprüche 1 bis 9, **dadurch gekennzeichnet, dass** die wenigstens eine Antriebseinrichtung mit der ersten oder der zweiten seismischen Masse mittels zumindest eines Federelements so gekoppelt ist, dass eine translatorische Kopplung in Antriebsrichtung zwischen Antriebseinheit und erster oder zweiter seismischer Masse erfolgt und eine Entkopplung in alle anderen zumindest translatorischen Richtungen erfolgt.

12. Drehratensensor nach Anspruch 11, **dadurch gekennzeichnet, dass** die Antriebseinrichtung dabei zusätzlich am Substrat durch zumindest ein weiteres Federelement aufgehängt ist, wobei diese Aufhängung in der x-y-Ebene und dabei senkrecht zur Antriebsrichtung steif ausgebildet ist, so dass Auslenkungen der Antriebseinrichtung in der x-y-Ebene, mit von der Abtriebsrichtung abweichender Richtung, unterdrückt werden.

13. Verwendung eines Drehratensensors nach mindestens einem der Ansprüche 1 bis 12 in Kraftfahrzeugen, insbesondere zur Erfassung der Gierrate, also einer Drehung um die Hochachse des Fahrzeugs, und zur Erfassung einer Rollrate oder einer Nickrate des Fahrzeugs.

**Claims**

1. Micromechanical rotation rate sensor, comprising a substrate whose base surface is aligned parallel to the x-y plane of a Cartesian coordinate system (x, y, z), with the rotation rate sensor having at least one first seismic mass (1) and a second seismic mass (2) which are coupled to at least one drive device (14) and are suspended such that the first and the second seismic masses (2) are driven such that they are deflected in antiphase in one drive mode, with the rotation rate sensor being designed such that it can simultaneously detect rotation rates about at least two mutually essentially orthogonal sensitive axes (z, y; z, x), with at least the second seismic mass (2) being in the form of a frame which at least partially surrounds the first seismic mass (1) with respect to the position on the x-y plane, **characterized in that** the first seismic mass (1) and the second seismic mass (2) are coupled to one another by means of at least one first coupling device (3, 4, 5, 7) and one second coupling device (8, 9, 10, 12) such that, when a first rotation rate is detected about the first sensitive axis (x; y), the first seismic mass (1) and the second seismic mass (2) oscillate in antiphase in a first read mode, and **in that**, when a second rotation rate is detected about the second sensitive axis (z), they likewise oscillate in antiphase in a second read mode, with the first (3, 4, 5, 7) and the second coupling device (8, 9, 10, 12) each comprising at least one essentially rigid coupling beam (5, 10) with the coupling beam (5, 10) comprising spring elements (3, 4, 8, 9), whereby the coupling beam (5, 10) is coupled on the one hand to the first seismic mass (1) and on the other hand to the second seismic mass, 10 (2), with the coupling beam (5, 10) being suspended on at least one torsion spring element (7, 12) with the torsion spring element (7, 12) being designed such that it allows rotational deflections of the coupling beam (5, 10) about one or two axes, and suppresses further rotational deflections and all translational deflections of the coupling beam (5, 10).

2. Rotation rate sensor according to Claim 1, **characterized in that** the first and the second seismic masses have essentially the same mass and **in that** the rotation rate sensor is designed and the first and second seismic masses are designed and arranged such that the center of gravity of the entire rotation rate sensor remains essentially at rest with respect to the deflections of the seismic masses in the drive mode.

3. Rotation rate sensor according to Claim 1 or 2, **characterized in that** the rotation rate sensor has a single drive device, which drives the first and the second seismic masses of the rotation rate sensor in antiphase, for which purpose the seismic masses are suspended, and are coupled to one another by the first coupling device, in an appropriate manner.

4. Rotation rate sensor according to at least one of Claims 1 to 3, **characterized in that** the rotation rate sensor is designed such that the first sensitive axis (y) lies on the x-y plane, that is to say on the base surface of the substrate, in particular **in that** the first sensitive axis is designed to be parallel to the x axis or to the y axis, and **in that** the second sensitive axis (z) is designed to be parallel to the z axis, that is to say at right angles to the base surface of the substrate.

5. Rotation rate sensor according to at least one of Claims 1 to 4, **characterized in that** the first (1) and second seismic mass (2) of the rotation rate sensor are designed, suspended and coupled by means of at least the first (3, 4, 5, 7)and second coupling device (8, 9, 10, 12) such that they are suspended such that they can move exclusively for their respective deflections within the drive mode, for their respective deflections within the first read mode and for their respective deflections within the second read mode, and **in that** the first (1) and second seismic mass (2) are suspended stiffly with respect to all deflections in other directions and all in-phase deflections of the first (1) and second seismic mass (2).

6. Rotation rate sensor according to at least one of Claims 1 to 5, **characterized in that** the deflection of the first and second seismic masses in each of the at least two read modes are detected in a duplicated and differential manner, with the deflection of one of the two seismic masses in each case being detected in opposite senses by two read devices with respect to the antiphase deflection, that is to say to one seismic mass in phase and to the other seismic mass in antiphase, that is to say that the first and second seismic masses and/or the devices which are also deflected with at least one of the seismic masses are each associated with at least two read devices which are each designed and arranged in particular such that one of these two read devices detects a capacitance increase when the other read device detects a capacitance decrease.

7. Rotation rate sensor according to at least one of Claims 1 to 6, **characterized in that** the first coupling device is designed such that it forces antiphase deflections of the seismic masses with respect to the drive mode and suppresses in-phase deflections with respect thereto, and **in that** the first and the second coupling devices are designed such that they force antiphase deflections of the seismic masses with respect to the first and with respect to the second read modes, and suppress in-phase deflections with respect thereto, in particular suppressing all in-phase deflections of the first and second seismic masses.

8. Rotation rate sensor according to at least one of Claims 1 to 7, **characterized in that** at least one coupling beam of at least one of the coupling devices is associated with two or more read devices, with the read devices being designed and arranged such that they detect the rotational deflection of this coupling beam with respect to the first or second read mode in phase and in antiphase, in this case one of them in phase and the other in antiphase.

9. Rotation rate sensor according to Claim 8, **characterized in that** this coupling beam is designed to be essentially c-shaped, in particular with a base surface essentially parallel to the x-y plane in a rest state, with at least two edge segments and one connection segment, with the connection segment being connected essentially centrally to the torsion spring element such that the two edge segments can be deflected rotationally in antiphase, with this torsion spring element not being completely stiff at least with respect to a parasitic rotational deflection about the y axis, for which reason the two read devices which are associated with this coupling beam are arranged such that the centers of their longitudinal sides, essentially in the direction of the longitudinal side of the two edge segments, are each arranged with respect to the x-y alignment opposite the center of the longitudinal side of one of the edge segments, such that possible in-phase rotational deflections of the two edge segments about the y axis, which result from these two edge segments then being in an inclined position, are essentially not detected by the two read devices, with these two read devices in particular being arranged parallel to the two edge segments in a rest state, in each case with respect to the base surfaces.

10. Rotation rate sensor according to at least one of Claims 1 to 9, **characterized in that** the at least one drive device is rigidly connected to the first or to the second seismic mass.

11. Rotation rate sensor according to at least one of Claims 1 to 9, **characterized in that** the at least one drive device is coupled to the first or to the second seismic mass by means of at least one spring element, such that translational coupling is provided in the drive direction between the drive unit and the first or second seismic mass, and decoupling is provided in all other at least translational directions.

**12.** Rotation rate sensor according to Claim 11, **characterized in that** the drive device is in this case additionally suspended on the substrate by at least one further spring element, with this suspension being designed to be stiff on the x-y plane and in this case at right angles to the drive direction, such that deflections of the drive device on the x-y plane in a direction other than the output-drive direction are suppressed.

**13.** Use of a rotation rate sensor according to at least one of Claims 1 to 12 in motor vehicles, in particular for detection of the yaw rate, that is to say rotation about the vertical axis of the vehicle, and for detection of a roll rate or a pitch rate of the vehicle.

**Revendications**

**1.** Capteur de vitesse de rotation micromécanique, comprenant un substrat dont la surface de base est orientée parallèlement au plan x-y d'un systèmes de coordonnées cartésiennes (x, y, z), le capteur de vitesse de rotation possédant au moins une première (1) et une deuxième masse sismique (2) qui sont accouplées à au moins un dispositif d'entraînement (14) de telle sorte et qui sont suspendues de telle sorte que la première et la deuxième masse sismique (2), dans un mode d'entraînement, sont entraînées en déviation en opposition de phase, le capteur de vitesse de rotation étant configuré de telle sorte qu'il peut détecter les vitesses de rotation simultanément autour d'au moins deux axes sensibles (z, y ; z, x) sensiblement orthogonaux l'un à l'autre, au moins la deuxième masse sismique (2) étant réalisée sous la forme d'un cadre qui entoure au moins partiellement la première masse sismique (1) en référence à son positionnement dans le plan x-y, **caractérisé en ce que** la première masse sismique (1) deuxième masse sismique (2) sont accouplées l'une à l'autre au moyen d'au moins un premier dispositif d'accouplement (3, 4, 5, 7) et d'un deuxième dispositif d'accouplement (8, 9, 10, 12) de telle sorte que la première masse sismique (1) et la deuxième masse sismique (2), lors de la détection d'une première vitesse de rotation, oscillent en opposition de phase autour du premier axe sensible (x ; y) dans un premier mode de lecture et que lors de la détection d'une deuxième vitesse de rotation, oscillent également en opposition de phase autour du deuxième axe sensible (z) dans un deuxième mode de lecture, le premier (3, 4, 5, 7) et le deuxième dispositif d'accouplement (8, 9, 10, 12) comportant respectivement au moins une barre d'accouplement (5, 10) de configuration sensiblement rigide, la barre d'accouplement (5, 10) comprenant des éléments ressorts (3, 4, 8, 9) par lesquels la barre d'accouplement (5, 10) est accouplée d'un côté avec la première masse sismique (1) et de l'autre côté avec la deuxième masse sismique (2), la barre d'accouplement (5, 10) étant suspendue à au moins un élément ressort de torsion (7, 12), l'élément ressort de torsion (7, 12) étant conçu de telle sorte qu'il permet des déviations en rotation de la barre d'accouplement (5, 10) autour de 1 ou 2 axes et inhibe des déviations en rotation supplémentaires et toutes les déviations en translation de la barre d'accouplement (5, 10).

**2.** Capteur de vitesse de rotation selon la revendication 1, **caractérisé en ce que** la première et la deuxième masse sismique possèdent une masse sensiblement identique et **en ce que** le capteur de rotation est configuré de telle sorte et la première et la deuxième masse sismique sont configurées et disposées de telle sorte que le centre de gravité du capteur de rotation dans son ensemble par rapport aux déviations des masses sismiques dans le mode d'entraînement reste sensiblement au repos.

**3.** Capteur de vitesse de rotation selon la revendication 1 ou 2, **caractérisé en ce que** le capteur de vitesse de rotation possède un dispositif d'entraînement unique qui entraîne la première et la deuxième masse sismique du capteur de vitesse de rotation en opposition de phase, les masses sismiques étant à cet effet suspendues en conséquence et accouplées l'une à l'autre par le premier dispositif d'accouplement.

**4.** Capteur de vitesse de rotation selon au moins l'une des revendications 1 à 3, **caractérisé en ce que** le capteur de vitesse de rotation est configuré de telle sorte que le premier axe sensible (y) se trouve dans le plan x-y, c'est-à-dire dans la surface de base du substrat, notamment **en ce que** le premier axe sensible est configuré parallèle à l'axe x ou à l'axe y, et **en ce que** le deuxième axe sensible (z) est configuré parallèle à l'axe z, c'est-à-dire perpendiculaire à ma surface de base du substrat.

**5.** Capteur de vitesse de rotation selon au moins l'une des revendications 1 à 4, **caractérisé en ce que** la première (1) et la deuxième masse sismique (2) du capteur de vitesse de rotation sont configurées, suspendues et accouplées au moyen d'au moins le premier (3, 4, 5, 7) et le deuxième dispositif d'accouplement (8, 9, 10, 12) de telle sorte qu'elles sont suspendues exclusivement de manière mobile pour leurs déviations respectives à l'intérieur du mode d'entraînement, pour leurs déviations respectives à l'intérieur du premier mode de lecture et pour leurs déviations respectives à l'intérieur du deuxième mode de lecture, et **en ce que** la première (1) et la deuxième masse sismique (2) sont suspendues de manière rigide en référence à toutes les déviations dans des autres directions et toutes les déviations en phase de la première (1) et de la deuxième masse sismique (2).

**6.** Capteur de vitesse de rotation selon au moins l'une des revendications 1 à 5, **caractérisé en ce que** la déviation de la première et de la deuxième masse sismique dans chacun des au moins deux modes de lecture est acquise par détection différentielle double, et pour ce qui concerne la déviation en opposition de phase, c'est-à-dire l'une des masses sismiques en phase et l'autre masse sismique en opposition de phase, la déviation de l'une des deux masses sismiques étant respectivement détectée en mouvement opposé par deux dispositifs de lecture, ce qui veut dire qu'à la première et à la deuxième masse sismique et/ou aux dispositifs qui accompagnent la déviation d'au moins l'une des masses sismiques sont respectivement associés au moins deux dispositifs de déviation, lesquels sont notamment configurés et disposés de telle sorte qu'un de ces deux dispositifs de lecture détecte une augmentation de capacité lorsque l'autre dispositif de lecture détecte une diminution de capacité.

**7.** Capteur de vitesse de rotation selon au moins l'une des revendications 1 à 6, **caractérisé en ce que** le premier dispositif d'accouplement est configuré de telle sorte qu'il force des déviations en opposition de phase des masses sismiques pour ce qui concerne le mode d'entraînement et inhibe les déviations en phase en rapport avec celui-ci et **en ce que** le premier et le deuxième dispositif d'accouplement sont configurés de telle sorte qu'ils forcent des déviations en opposition de phase des masses sismiques pour ce qui concerne le premier et pour ce qui concerne le deuxième mode d'entraînement et inhibent simultanément les déviations en phase en rapport avec ceux-ci, notamment inhibent toutes les déviations en phase de la première et de la deuxième masse sismique.

**8.** Capteur de vitesse de rotation selon au moins l'une des revendications 1 à 7, **caractérisé en ce que** deux dispositifs de lecture ou plus sont associés à au moins une barre d'accouplement d'au moins l'un des dispositifs d'accouplement, les dispositifs de lecture étant configurés et disposés de telle sorte qu'ils détectent la déviation en rotation de cette barre d'accouplement en phase et en opposition de phase en référence au premier ou au deuxième mode de lecture, l'un deux en phase et l'autre en opposition de phase.

**9.** Capteur de vitesse de rotation selon la revendication 8, **caractérisé en ce que** cette barre d'accouplement est sensiblement configurée en C, notamment avec une surface de base sensiblement parallèle au plan x-y dans un état de repos, comprenant au moins deux segments de bord et un segment de liaison, le segment de liaison étant relié à l'élément ressort de torsion sensiblement au centre et les deux segments de bord pouvant ainsi être déviés en rotation en opposition de phase, cet élément ressort de torsion n'étant pas entièrement rigide au moins pour ce qui concerne une déviation en rotation parasite autour de l'axe y, ce pourquoi les deux dispositifs de lecture associés à cette barre d'accouplement sont disposés de telle sorte qu'ils sont disposés avec le centre de leur côté long, sensiblement dans la direction du côté long des deux segments de bord, respectivement en vis-à-vis du centre du côté long de l'un des segments de bord en référence à l'orientation x-y, de sorte que les éventuelles déviations en rotation en phase des deux segments de bord autour de l'axe, résultant de la position inclinée alors produite de ces deux segments de bord, ne soit sensiblement pas détectées par les deux dispositifs de lecture, ces deux dispositifs de lecture étant notamment disposés en parallèle des deux segments de bord dans un état de repos, respectivement en référence aux surfaces de base.

**10.** Capteur de vitesse de rotation selon au moins l'une des revendications 1 à 9, **caractérisé en ce que** l'au moins un dispositif d'entraînement est relié à demeure à la première ou à la deuxième masse sismique.

**11.** Capteur de vitesse de rotation selon au moins l'une des revendications 1 à 9, **caractérisé en ce que** l'au moins un dispositif d'entraînement est accouplé à la première ou à la deuxième masse sismique au moyen d'au moins un élément ressort de telle sorte qu'un accouplement en translation est effectué dans la direction de l'entraînement entre l'unité d'entraînement et la première ou la deuxième masse sismique et un désaccouplement est effectué dans toutes les autres directions au moins de translation.

**12.** Capteur de vitesse de rotation selon ma revendication 11, **caractérisé en ce que** le dispositif d'entraînement est ici en plus suspendu au substrat par au moins un élément ressort supplémentaire, cette suspension étant configurée de manière rigide dans le plan x-y et ici perpendiculairement à la direction d'entraînement, de sorte que les déviations du dispositif d'entraînement dans le plan x-y ayant une direction différente de la direction d'entraînement soient inhibées.

**13.** Utilisation d'un capteur de vitesse de rotation selon au moins l'une des revendications 1 à 12 dans des véhicules automobiles, notamment pour la détection de la vitesse de lacet, c'est-à-dire une rotation autour de l'axe vertical du véhicule, et pour la détection d'une vitesse de roulis et d'une vitesse de tangage du véhicule.

Fig. 1

**Fig. 2**

Fig. 3

**Fig. 4**

Fig. 5

Fig. 6

$\vec{F}_{cor}$

$\vec{v}$

$\vec{F}_{cor}$

$\vec{v}$

$\Omega_y$

z

y

x

Fig. 7

EP 2 475 960 B1

Fig. 8

**Fig. 9**

Fig. 10

Fig. 11

## Fig. 12

Fig. 13

Fig. 14

Fig. 15

Fig. 16

Fig. 17

Fig. 18

**EP 2 475 960 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008015044 A
- US 20040154398 A
- WO 2004097432 A
- WO 2008021534 A
- DE 102006052522
- DE 102005051048
- US 6892575 B
- EP 1832841 A
- WO 2008051677 A
- DE 4428405 A1
- WO 03064975 A1
- DE 102007054505 A1
- DE 102007030119 A1
- EP 1918723 B1
- WO 9817973 A1